# EUROPEAN PATENT APPLICATION

(11) **EP 4 648 151 A1**
(43) Date of publication of application: **12.11.2025**
(21) Application number: 24868686.7
(22) Date of filing: 20.09.2024
(51) Int. Cl.: H01M 10/04, H01M 4/70, H01M 50/105, H01M 50/14, H01M 50/466, H01M 50/471

(54) **CURVED SECONDARY BATTERY INCLUDING ELECTRODE SUPPORT, AND MANUFACTURING METHOD THEREOF**

(30) Priority: 20.09.2023 KR 20230125427
(71) Applicant: LG Energy Solution, Ltd., Seoul 07335 (KR)
(72) Inventor: YOON, In Se, Daejeon 34122 (KR); SEO, Tai Joon, Daejeon 34122 (KR); PARK, Lae Seo, Daejeon 34122 (KR)
(74) Representative: Plasseraud IP
(86) International application number: PCT/KR2024/014131
(87) International publication number: WO 2025/063709

(57) **Abstract**

A curved cell produced in a curved cell production jig is produced in a rounded shape having a specific curvature, and deformation of the curved cell occurs as the curved cell is repeatedly charged and discharged in a device equipped with the curved cell, and a curved secondary battery including an electrode support formed in an electrode assembly to prevent the deformation of the curved cell such that the curved cell can be operated without damage in a device that requires energy and a method of manufacturing the same are disclosed, wherein the shape of the curved secondary battery is maintained even after repeated charging and discharging.

## Description

### [Technical Field]

This application claims the benefit of priority to Korean Patent Application No. 2023-0125427 filed on September 20, 2023, the disclosure of which is incorporated herein by reference in its entirety.

The present invention relates to a curved secondary battery including an electrode support and a method of manufacturing the same. Specifically, a curved cell produced in a curved cell production jig is produced in a rounded shape having a specific curvature, and deformation of the curved cell occurs as the curved cell is repeatedly charged and discharged in a device equipped with the curved cell, and the present invention relates to a curved secondary battery including an electrode support formed in an electrode assembly to prevent the deformation of the curved cell such that the curved cell can be operated without damage in a device that requires energy and a method of manufacturing the same.

### [Background Art]

With rapid improvement in safety and capacity of a lithium secondary battery, which is capable of being charged and discharged, the types of devices that use the lithium secondary battery as an energy source have increased in number.

For example, the lithium secondary battery has been widely used as an energy source for wireless mobile devices, which are small multifunctional products, or wearable devices, which are worn on bodies, and has also been used as an energy source for electric vehicles and hybrid electric vehicles presented as alternatives to existing gasoline and diesel vehicles, which cause air pollution, or as a medium or large battery pack configured to be used in an energy storage system (ESS).

Depending on the shape of a battery case, the lithium secondary battery is classified as a cylindrical battery cell having an electrode assembly mounted in a cylindrical metal can, a prismatic battery cell having an electrode assembly mounted in a prismatic metal can, or a pouch-shaped battery cell having an electrode assembly mounted in a pouch-shaped case made of an aluminum laminate sheet. Thereamong, the pouch-shaped battery cell has the advantages of relatively large capacity and easy structural modification.

Various wearable computer technologies and applications using these secondary batteries as a power source are being developed and published, and electronic devices such as mobile phones and laptop computers are being designed so as to have a predetermined curved surface for ergonomic design. Accordingly, secondary batteries for operating these electronic devices also need to be formed so as to have a predetermined curved surface depending on the shape of the electronic devices.

A curved cell formed so as to have such a curved surface is subject to deformation as the curved cell is repeatedly charged and discharged in a device that requires energy. There is a need for a curved cell that prevents this and maintains a correct thickness and curvature to satisfy the specifications of a product and a method of manufacturing the same.

Korean Patent Application Publication No. 10-2015-0092669 discloses a curved electrode assembly, a cladding member configured to seal the electrode assembly, a reinforcing layer located on the cladding member, the reinforcing layer being curved, and an adhesive layer configured to bond the reinforcing layer, wherein the bending strength of the reinforcing layer is greater than the volume expansion force of a curved secondary cell.

However, there is a difference from the present invention in which an internal support is formed on a specific surface of an electrode assembly in a pouch to prevent curvature change.

Korean Patent Application Publication No. 10-2013-0119664 discloses a curved electrode assembly, a pouch configured to seal the electrode assembly, a reinforcement portion continuously formed on a side surface of a body portion of the pouch, and the area, width, and constant curvature characteristics of the reinforcement portion.

However, there is a difference from the present invention in which an internal support is formed on the surface of a current collector of the electrode assembly on which no electrode active material is formed in the pouch to prevent curvature change.

Korean Patent Application Publication No. 10-2003-0096718 discloses a pouch configured to receive therein an electrode assembly including a positive electrode plate, a negative electrode plate, and a separator interposed between the positive electrode plate and the negative electrode plate in the state in which at least a part of each of electrode leads connected respectively to the positive electrode plate and the negative electrode plate is exposed to the outside and at least one reinforcing member attached to the entirety or a part of the surface of the pouch, wherein the reinforcing member is a metal member.

However, there is a difference from the present invention in which an internal support having elastic resilience at high temperatures due to repeated charging and discharging of a curved cell is formed on a specific surface of an electrode assembly in a pouch configured to receive the curved cell to prevent curvature change.

Japanese Patent Application Publication No. 2002-251855 discloses a non-aqueous secondary battery, which is a battery having a battery element and a cladding film configured to cover the cell element, the cladding film having a moisture-proof layer and a synthetic resin layer, wherein the edges of the cladding film are bonded to each other in an overlapping state, and the joint of the cladding film is folded back so as to overlap each other, whereby four or more layers are stacked and pressed.

However, there is a difference from the present invention in which an internal support made of a thermosetting material is formed on a specific surface of an electrode assembly in a pouch to prevent curvature change.

Therefore, there is a need to develop a curved secondary battery including an electrode support formed in an electrode assembly to prevent curvature change, deformation, asymmetry, and uneven thickness of the curved cell and damage to a pouch and/or a lead that may occur during a charging and discharging process of the curved cell such that the curved cell can be operated without damage in a device that requires energy and a method of manufacturing the same.

### (Prior Art Documents)

(Patent Document 1) Korean Patent Application Publication No. 10-2015-0092669
(Patent Document 2) Korean Patent Application Publication No. 10-2013-0119664
(Patent Document 3) Korean Patent Application Publication No. 10-2003-0096718
(Patent Document 4) Japanese Patent Application Publication No. 2002-251855

### [Disclosure]

### [Technical Problem]

The present invention has been made in view of the above problems, wherein a curved cell produced in a curved cell production jig is produced in a rounded shape having a specific curvature, and deformation of the curved cell occurs as the curved cell is repeatedly charged and discharged in a device equipped with the curved cell. It is an object of the present invention to provide a curved secondary battery including an electrode support formed in an electrode assembly to prevent the deformation of the curved cell such that the curved cell can be operated without damage in a device that requires energy and a method of manufacturing the same.

### [Technical Solution]

A curved secondary battery according to the present invention to accomplish the above object includes a curved electrode assembly (100) having a positive electrode/separator/negative electrode stacking structure, a cell case (200) configured to accommodate the electrode assembly, and a curved internal support (300) formed on at least one surface of the electrode assembly.

The electrode assembly may be a stacked and folded type electrode assembly in which stacked type monocells, bi-cells, or full cells, each of which is a unit cell, are sequentially wound by a separator sheet.

The internal support may be formed on each of surfaces (110, 120) of a current collector forming the electrode on which no active material layer is formed.

In addition, the internal support may be formed on at least one longitudinal (y-direction) side surfaces (130, 140) of the current collector of the electrode assembly.

The internal support may be made of one or more of metal, ceramic, or a polymer compound.

The polymer compound may be a thermosetting polymer compound.

The thermosetting polymer compound may be one or more of polyamide (PA), polyarylene ether (PPE), polyether ether ketone (PEEK), polyamideimide (PI), or polytetrafluoroethylene (PTFE).

The internal support may be formed on a part or the entirety of the surface of the current collector or the side surface of the current collector.

The thickness of the internal support may decrease from the center of the current collector in a lateral direction.

The internal support may include at least one support bar having elastic resilience formed therein so as to extend in lateral or longitudinal directions.

In addition, the present invention may provide various combinations of the above solving means.

### [Advantageous Effects]

As is apparent from the above description, the shape of a curved secondary battery according to the present invention may be maintained even after repeated charging and discharging of the curved secondary battery.

In addition, the shape of the curved secondary cell may be maintained by an internal support having elastic resilience in the electrode assembly even in a high-temperature environment due to charging and discharging.

Therefore, the present invention has the effect of preventing curvature change by reinforcing vulnerable parts that are formed when manufacturing curved cells.

### [Description of Drawings]

FIG. 1 is a conceptual view of a curved secondary battery with a conventional reinforcing layer.
FIG. 2 is a perspective view of the curved secondary battery with the conventional reinforcing layer.
FIG. 3 is a graph showing the curvature change rates and thickness changes of a curved secondary battery and the curved secondary battery with the conventional reinforcing layer according to the number of charge and discharge cycles.
FIG. 4 is a view showing the deformation of the curved secondary battery with the conventional reinforcing layer mounted in a device.
FIG. 5 is a sectional view of an electrode assembly in which an internal support according to an embodiment of the present invention is formed on the surface of a current collector.
FIG. 6 is a sectional view of an electrode assembly in which the internal support according to the embodiment of the present invention is formed on a side surface of a current collector.
FIG. 7 is a sectional view of a curved secondary battery in which the internal support according to the embodiment of the present invention is formed on the surface of the current collector.
FIG. 8 is a sectional view before disassembly of the curved secondary battery in which the internal support according to the embodiment of the present invention is formed on the surface of the current collector.
FIG. 9 is a sectional view after disassembly of the curved secondary battery in which the internal support according to the embodiment of the present invention is formed on the surface of the current collector.
FIG. 10 is a sectional view before and after disassembly of a curved secondary battery in which an adhesive layer and the internal support according to the embodiment of the present invention are formed on the surface of the current collector.
FIG. 11 is a view of an electrode assembly including an internal support having a thickness change according to an embodiment of the present invention.
FIG. 12 is a perspective view of an electrode assembly including an internal support including a support bar according to an embodiment of the present invention.
FIG. 13 is an A-A' sectional view of the electrode assembly including the internal support including the support bar according to the embodiment of the present invention.
FIG. 14 is a B-B' sectional view of the electrode assembly including the internal support including the support bar according to the embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the drawings.

An electrode assembly may be manufactured, for example, by stacking a positive electrode plate having a positive electrode active material applied thereto, a negative electrode plate having a negative electrode active material applied thereto, and a separator interposed between the positive electrode plate and the negative electrode plate a plurality of times.

The electrode assembly may be manufactured by winding a stack of the positive electrode plate, the separator, and the negative electrode plate
in the form of a jelly-roll.

The positive electrode plate may include a positive electrode active material portion having a positive electrode active material applied thereto and a positive electrode uncoated portion having no positive electrode active material applied thereto. The positive electrode active material may be a lithium-containing transition metal oxide, such as LiCoO₂, LiNiO₂, LiMnO₂, LiMnO₄, or a lithium chalcogenide compound.

The positive electrode active material portion may be formed, for example, by applying a positive electrode active material to a part of at least one surface of an aluminum plate, and the remaining part of the aluminum plate having no positive electrode active material applied thereto may be the positive electrode uncoated portion.

The negative electrode plate may include a negative electrode active material portion having a negative electrode active material applied thereto and a negative electrode uncoated portion having no negative electrode active material applied thereto. The negative electrode active material may be a carbon material, such as crystalline carbon, amorphous carbon, carbon composite, or carbon fiber, lithium metal, or a lithium alloy.

The negative electrode active material portion may be formed, for example, by applying a negative electrode active material to a part of at least one surface of a copper plate, and the remaining part of the copper plate having no negative electrode active material applied thereto may be the negative electrode uncoated portion.

The separator may be manufactured, for example, by coating a polyvinylidene fluoride-hexafluoropropylene copolymer (PVDF-HFP co-polymer) on any one substrate selected from the group consisting of polyethylene (PE), polystyrene (PS), polypropylene (PP), and a copolymer of polyethylene (PE) and polypropylene (PP).

A first electrode tab and a second electrode tab are attached to the electrode assembly. Specifically, a first electrode tab and a second electrode tab 134 are attached to positive electrode uncoated portions and negative electrode uncoated portions, respectively, and the first electrode tab and the second electrode tab may extend outward through a pouch.

The pouch seals the electrode assembly and receives an electrolyte therein together with the electrode assembly. The pouch may have, for example, a three-layer structure of an insulating layer, a metal layer, and an insulating layer. For example, the metal layer may be made of aluminum, steel, stainless steel, or the like, and the insulating layer may be made of modified polypropylene (CPP), polyethylene terephthalate (PET), nylon, or the like; however, the present invention is not limited thereto.

The pouch may include a pair of wing portions formed by fusion bonding. The pouch may include a receiving portion forming a first surface thereof and a cover portion forming a second surface thereof. A receiving space for receiving the electrode assembly is formed in the receiving portion, and when the electrode assembly is received in the receiving space, the cover portion connected to the receiving portion on one side is folded over the receiving portion, and then the receiving portion and the cover portion are bonded to each other by fusion at the edge of the receiving space. Accordingly, the electrode assembly may be sealed, and the edge where the receiving portion and the cover portion are bonded to each other forms the pair of wing portions. The pair of wing portions may be bent parallel to side surfaces of a curved secondary battery.

A curved cell has a shape that is bent so as to have a predetermined radius of curvature R through a shaping process. That is, the curved cell may have a predetermined curved surface so as to correspond to the shape of an electronic device in which the curved cell is mounted, thereby eliminating the gap between the electronic device and the curved cell, efficiently utilizing an internal space of the electronic device, and preventing damage to the curved cell as the curved cell moves in the electronic device.

Meanwhile, when the radius of curvature R of the curved cell is decreased, the pressure applied to the curved cell during the shaping process must be increased. If the pressure is increased, a stress concentration area may be formed in the curved cell that is pressed, and deformation of the curved cell, such as twisting, may occur. In the present invention, however, it is possible to minimize the stress generated in the curved cell by applying minimal pressure through two shaping processes and to manufacture a curved cell having a small radius of curvature R of 50R or less.

### (Comparative Example)

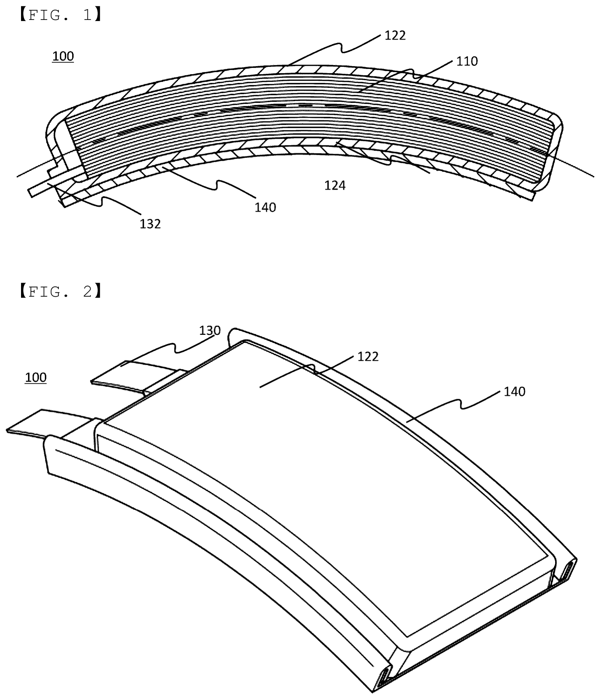

FIG. 1 is a conceptual view of a curved secondary battery with a conventional reinforcing layer.

FIG. 2 is a perspective view of the curved secondary battery with the conventional reinforcing layer.

The curved secondary battery may have a shape that is curved so as to have a predetermined radius of curvature R. That is, the curved secondary battery may have a predetermined curved surface so as to correspond to the shape of an electronic device in which the curved secondary battery is mounted, thereby eliminating the space between the electronic device and the curved secondary battery and efficiently utilizing an internal space of the electronic device.

The curved secondary battery of FIGs. 1 and 2 may include an electrode assembly, a pouch having a first cladding member and a second cladding member configured to seal the electrode assembly, and a reinforcing layer attached to the first cladding member.

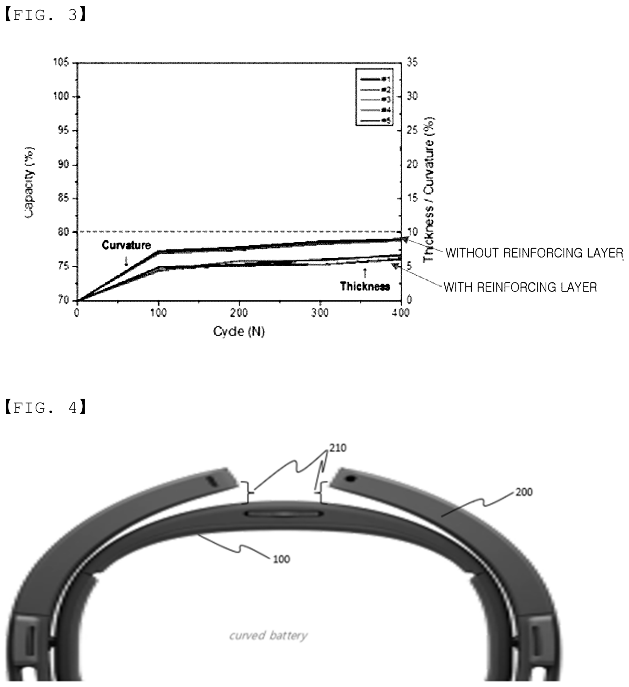

FIG. 3 is a graph showing the curvature change rates and thickness changes of a curved secondary battery and the curved secondary battery with the conventional reinforcing layer according to the number of charge and discharge cycles.

The curvature change rates and thickness changes of the curved secondary battery with the conventional reinforcing layer formed on the outside of the pouch and a curved secondary battery without any auxiliary member according to the number of charge and discharge cycles were measured.

Referring to FIG. 3, it can be seen that, for the first 100 cycles, the curvature change rates of the curved secondary battery with the reinforcing layer and the curved secondary battery without the auxiliary member are almost the same, and the curvature change rates increase to 7%.

It can be seen that, after 100 cycles, the curvature change rates of the curved secondary battery with the reinforcement layer and the curved secondary battery without the auxiliary member slightly increase to 10%.

Therefore, it can be seen that the effect of reducing the curvature change rate of the curved secondary battery with the reinforcing layer is negligible.

Referring to FIG. 3, it can be seen that, for the first 100 cycles, the curvature change rates of the curved secondary battery with the reinforcing layer and the curved secondary battery without the auxiliary member are almost the same, and the thickness changes increase to 5%.

It can be seen that, after 100 cycles, the thickness changes of the curved secondary battery with the reinforcing layer and the curved secondary battery without the auxiliary member slightly increase to 6%.

Therefore, it can be seen that the effect of reducing the thickness change of the curved secondary battery with the reinforcing layer is negligible.

FIG. 4 is a view showing the deformation of the curved secondary battery with the conventional reinforcing layer mounted in a device.

It can be seen that, when the conventional curved secondary battery with the reinforcing layer formed on the outside of the pouch was assembled into a device that requires energy, loosening may occur in the curved secondary battery with the reinforcing layer after the curved secondary battery was charged and discharged.

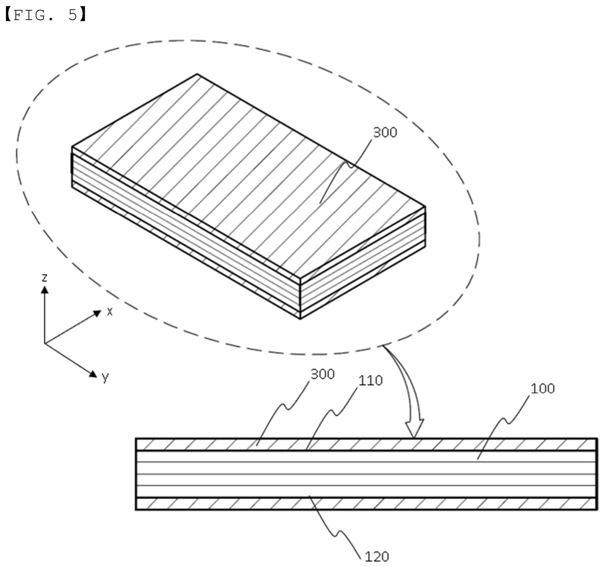

FIG. 5 is a sectional view of an electrode assembly in which an internal support according to an embodiment of the present invention is formed on the surface of a current collector.

A curved secondary battery may include a curved electrode assembly 100 having a positive electrode/separator/negative electrode stacking structure, a cell case 200 configured to receive the electrode assembly therein, and a curved internal support 300 formed on at least one surface of the electrode assembly.

The electrode assembly may include a separator between electrode plates having a positive electrode active material for forming a positive electrode a negative electrode active material for forming a negative electrode formed thereon, preferably current collectors.

In an example, the electrode assembly may be configured such that a positive electrode plate, a separator, and a negative electrode plate are sequentially stacked.

Alternatively, the electrode assembly may be wound about a winding axis to have a jelly-roll structure.

In addition, the electrode assembly may be bent in a direction perpendicular to a longitudinal direction, whereby the central axis of the stack may have a curved shape. Consequently, the electrode assembly may include a first concave surface S1 and a second convex surface S2 opposite the first concave surface S1.

In addition, the electrode assembly may be a stacked and folded type electrode assembly in which stacked type monocells, bi-cells, or full cells, each of which is a unit cell, are sequentially wound by a separator sheet.

The basic unit of an electrochemical cell is a monocell, a full cell, or a bi-cell.

The monocell may be configured to have a double-sided electrode plate structure in which an electrode active material is applied to both surfaces of a current collector. Since the monocell has a double-sided electrode plate structure, rather than a structure in which a separator and an electrode plate is stacked, it is easy to handle the monocell during processing.

As an electrode assembly having an advanced structure that is a mixture of a jelly-roll type electrode assembly and a stacked type electrode assembly, there may be a stacked and folded type electrode assembly having a structure in which a full cell having a positive electrode/separator/negative electrode structure of a certain unit size or a bi-cell having a positive electrode (negative electrode)/separator/negative electrode (positive electrode) /separator/positive electrode (negative electrode) structure is folded using a long separator film.

The properties of the full cell or the bi-cell are largely dependent on electrodes, an electrolyte, and other materials used. Thereamong, the amount of active material introduced into the electrodes is related to the maximum number of lithium ions that can ultimately be bound, and therefore a higher amount of active material results in a higher-capacity battery. Consequently, if the adhesion of a binder is high and the amount of the binder that is introduced is reduced, it is possible to manufacture an electrode having a large amount of the active material. Consequently, there is a need to provide a binder having excellent adhesion.

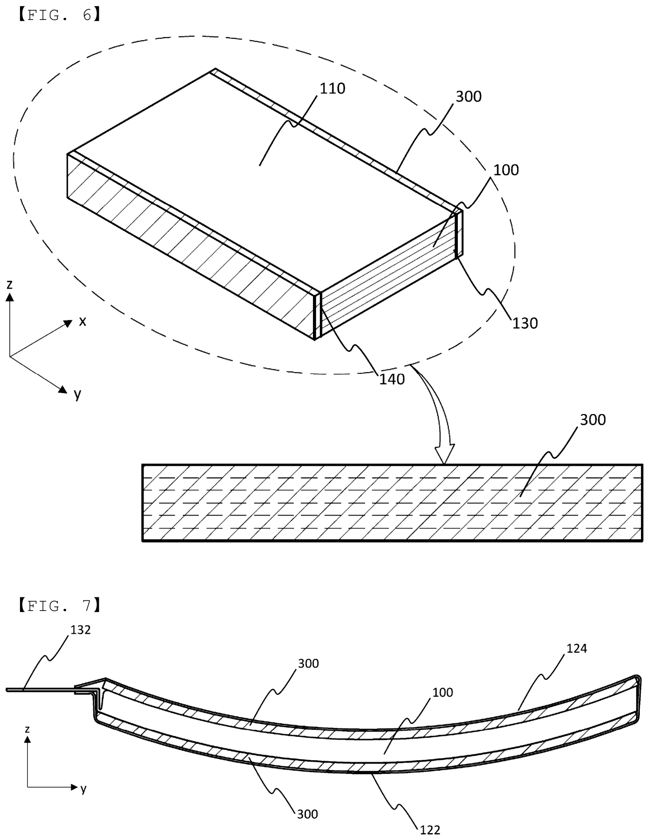

FIG. 6 is a sectional view of an electrode assembly in which the internal support according to the embodiment of the present invention is formed on a side surface of a current collector.

In addition, the internal support may be formed on surfaces 110 and 120 of a current collector forming the electrode on which no active material layer is formed.

The surfaces of the current collector may be the uppermost electrodes of an electrode assembly including a plurality of stacked electrodes.

The electrode may be a negative electrodes and/or a positive electrode.

In addition, the internal support may be formed on one or more longitudinal (y-direction) side surfaces 130 and 140 of the current collector of the electrode assembly.

Consequently, the internal support may abut side surfaces of the stacked plurality of electrodes and separators.

The internal support may be formed so as to wrap around the side surfaces of the stacked plurality of electrodes and separators.

The internal support may be formed so as to wrap around the entirety of the side surfaces of the electrode current collector and a part of the surfaces of the electrode current collector.

The internal support body may be in the form of a bracket.

FIG. 7 is a sectional view of a curved secondary battery in which the internal support according to the embodiment of the present invention is formed on the surface of the current collector.

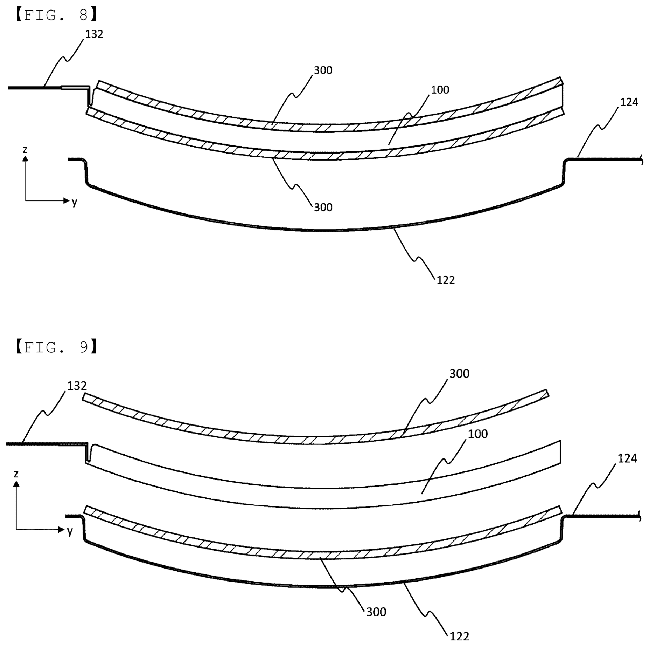

FIG. 8 is a sectional view before disassembly of the curved secondary battery in which the internal support according to the embodiment of the present invention is formed on the surface of the current collector.

In addition, the internal support may be made of one or more selected from among metal, ceramic, and a polymer compound.

In addition, the polymer compound may be a thermosetting polymer compound.

In addition, the thermosetting polymer compound may be one or more selected from among polyamide (PA), polyarylene ether (PPE), polyether ether ketone (PEEK), polyimide (PI), and polytetrafluoroethylene (PTFE).

FIG. 9 is a sectional view after disassembly of the curved secondary battery in which the internal support according to the embodiment of the present invention is formed on the surface of the current collector. In addition, an adhesive layer may be formed between the internal support and the surface of the current collector or the side surface of the current collector.

In addition, the adhesive layer may be one or more selected from among epoxy, silicone, polyurethane, polyamide, Teflon, and ceramic adhesives.

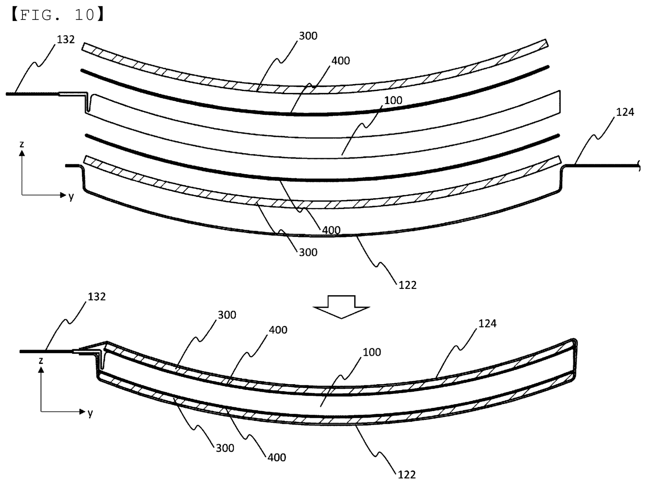

FIG. 10 is a sectional view before and after disassembly of a curved secondary battery in which an adhesive layer and the internal support according to the embodiment of the present invention are formed on the surface of the current collector.

In addition, the internal support may be formed on a part or the entirety of the surface of the current collector or the side surface of the current collector.

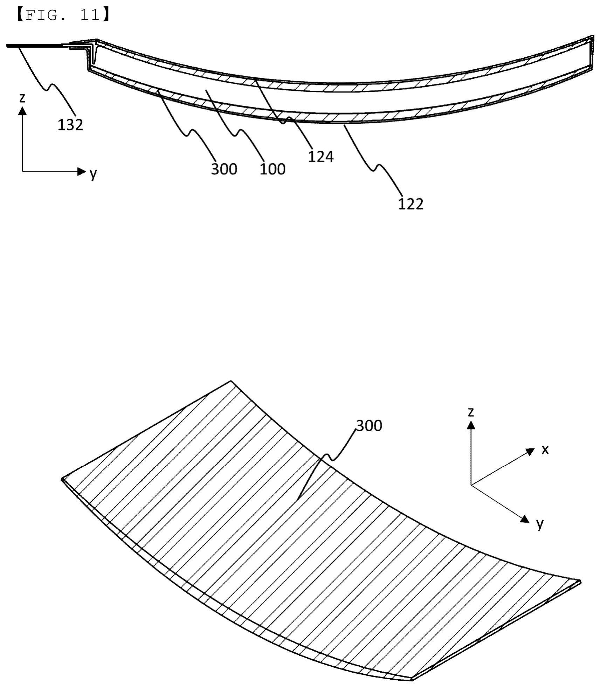

FIG. 11 is a view of an electrode assembly including an internal support having a thickness change according to an embodiment of the present invention.

In addition, the thickness of the internal support may be decreased from the center of the current collector in a lateral direction.

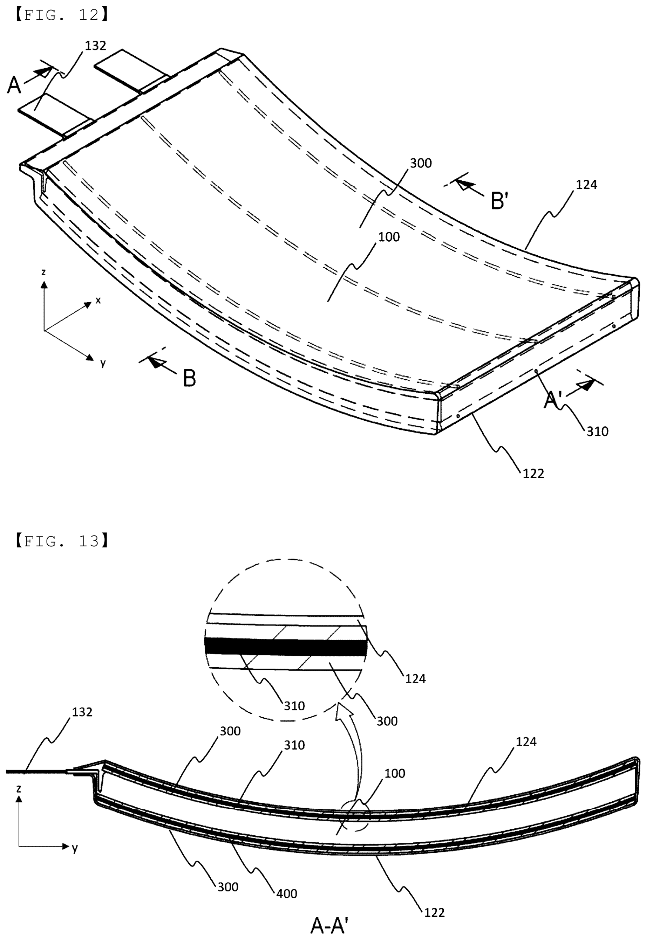

FIG. 12 is a perspective view of an electrode assembly including an internal support including a support bar according to an embodiment of the present invention.

In addition, the internal support may have at least one support bar having elastic resilience formed therein so as to extend in the lateral and longitudinal directions.

It is possible to prevent damage to the curved secondary cell as the curved secondary cell moves in the electronic device.

FIG. 13 is an A-A' sectional view of the electrode assembly including the internal support including the support bar according to the embodiment of the present invention.

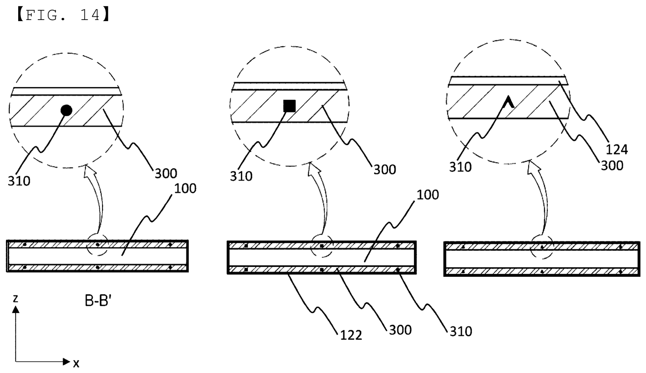

FIG. 14 is a B-B' sectional view of the electrode assembly including the internal support including the support bar according to the embodiment of the present invention.

The sectional shape of the support bar may be any one of a circular shape, a triangular shape, a quadrangular shape, and a " 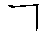 " shape.

At least one support bar may be formed in the internal support abutting the surface of the current collector or the side surface of the current collector.

The internal support may be provided therein with one or more support bars of different lengths having elastic resilience.

The internal support may be provided therein with one or more support bars of different thicknesses having elastic resilience.

The support bar may be made of at least one of a metal, a polymer material, and a ceramic component.

The elastic resilience of the support bar may be greater than or equal to the elastic resilience of the internal support, and the support bar and the internal support may be made of the same material.

Those skilled in the art to which the present invention pertains will appreciate that various applications and modifications are possible within the category of the present invention based on the above description.

### (Description of Reference Numerals)

100: Curved secondary cell
110: Electrode assembly
120, 220: Pouches
122: Pouch cup portion
124: Pouch cover portion
132: Electrode tab
140: Reinforcing layer
200: Instrument
210: Loosening
300: Internal support
310: Support bar
400: Adhesive layer

## Claims

1. A curved secondary battery comprising:
a curved electrode assembly having a positive electrode/separator/negative electrode stacking structure;
a cell case configured to accommodate the electrode assembly; and
a curved internal support formed on at least one surface of the electrode assembly.

2. The curved secondary battery according to claim 1, wherein the electrode assembly is a stacked and folded type electrode assembly in which stacked type monocells, bi-cells, or full cells, each of which is a unit cell, are sequentially wound by a separator sheet.

3. The curved secondary battery according to claim 1, wherein the internal support is formed on a surface of a current collector forming the electrode on which no active material layer is formed.

4. The curved secondary battery according to claim 1, wherein the internal support is formed on at least one longitudinal (y-direction) side surfaces of a current collector of the electrode assembly.

5. The curved secondary battery according to claim 3, wherein the internal support is made of one or more of metal, ceramic, or a polymer compound.

6. The curved secondary battery according to claim 5, wherein the polymer compound is a thermosetting polymer compound.

7. The curved secondary battery according to claim 6, wherein the thermosetting polymer compound is one or more of polyamide (PA), polyarylene ether (PPE), polyether ether ketone (PEEK), polyimide (PI), or polytetrafluoroethylene (PTFE).

8. The curved secondary battery according to claim 3 or 4, wherein an adhesive layer is formed between the internal support and the surface of the current collector or the side surface of the current collector.

9. The curved secondary battery according to claim 8, wherein the adhesive layer is one or more of epoxy, silicone, polyurethane, polyamide, Teflon, or ceramic adhesives.

10. The curved secondary battery according to claim 3 or 4, wherein the internal support is formed on a part or the entirety of the surface of the current collector or the side surface of the current collector.

11. The curved secondary battery according to claim 3 or 4, wherein a thickness of the internal support decreases from a center of the current collector in a lateral direction.

12. The curved secondary battery according to claim 3 or 4, wherein the internal support includes at least one support bar having elastic resilience formed therein so as to extend in lateral or longitudinal directions.
